Europäisches Patentamt

European Patent Office

Office européen des brevets

(11) Numéro de publication: **0 077 257**
A1

## (12) DEMANDE DE BREVET EUROPEEN

(21) Numéro de dépôt: 82401826.1

(22) Date de dépôt: 06.10.82

(51) Int. Cl.³: **B 23 K 33/00,** F 16 L 13/02

(30) Priorité: 09.10.81 FR 8119006

(43) Date de publication de la demande: 20.04.83
Bulletin 83/16

(84) Etats contractants désignés: **AT BE CH DE GB IT LI LU
NL SE**

(71) Demandeur: **SPIE-BATIGNOLLES (société anonyme),
Tour Anjou 33, Quai de Dion-Bouton, F-92814 Puteaux
(FR)**

(72) Inventeur: **Quintart, Roger, 19, rue Guynemer,
F-56680 Ferriere-la-Grande (FR)**

(74) Mandataire: **Bouju, André, 38 Avenue de la Grande
Armée, F-75017 Paris (FR)**

(54) Procédé et machine pour calibrer les extrémités d'éléments métalliques tubulaires.

(57) Le procédé est destiné au calibrage des extrémités d'éléments métalliques tubulaires (4, 5) destinés à être soudés bout à bout.

On engage à force ces extrémités sur une forme de calibrage (9) adaptée pour réaliser sur ces extrémités, un évasement dont le diamêtre intérieur maximal est au moins égal à celui correspondant à la tolérance maximale admise en fabrication, augmentée éventuellement de la tolérance sur l'ovalisation et celle due au retrait de refroidissement et de soudage.

Utilisation notamment pour calibrer des tubes en acier.

EP 0 077 257 A1

## Procédé et machine pour calibrer les extrémités d'éléments métalliques tubulaires.

La présente invention concerne un procédé et une machine pour calibrer les extrémités d'éléments métalliques tubulaires, en particulier des tubes en acier, destinés à être soudés bout à bout.

Les canalisations de transport de fluides, tels que l'eau chaude, la vapeur, les produits pétroliers liquides ou gazeux, les produits chimiques et alimentaires sont réalisés par soudage bout à bout de tubes en acier.

En fabrication, on admet pour de tels tubes, selon les normes NF A 49401, A 49112, A 49212 et A 49213 des tolérances de ± 1% sur le diamètre extérieur dans le cas de tubes roulés et soudés longitudinalement ou sur l'ovalisation dans le cas des tubes moulés ou forgés sans soudure.

Ainsi, parmi les tubes ayant un diamètre nominal de 1 m, la tolérance minimale sur le diamètre correspond à 990 mm et la tolérance maximale correspond à 1.010 mm.

Par ailleurs, la tolérance est de 12,5% sur l'épaisseur du tube.

Compte tenu de ces tolérances, la surface de contact entre deux tubes disposés bout à bout peut varier énormément pour un diamètre nominal donné.

Or, cette surface de contact présente une importance considérable, car elle détermine la fiabilité et la sécurité de l'assemblage par soudure que l'on veut réaliser.

Ainsi, si les calculs exigent pour cette soudure une épaisseur dans le sens radial des tubes, par exemple égale à 25 mm, il faut que la largeur de la surface de contact précitée soit égale au moins à la valeur précitée. Compte tenu de la tolérance sur le diamètre des tubes, la condition précitée ne peut être remplie que si l'épaisseur des tubes est largement supérieure à la largeur de cette surface de contact. Dans l'exemple considéré plus haut, cette épaisseur doit être de 35 mm au moins.

Par conséquent, pour répondre aux exigences concernant les soudures, on est obligé d'utiliser des tubes présentant une épaisseur nettement plus importante (40 % plus importante dans le cas de tubes de diamètre égal à 1 mm), que l'épaisseur minimale des soudures que l'on veut réaliser, ce qui affecte considérablement le coût de la matière première.

De plus, avant soudure, les extrémités des tubes sont calibrées par enlèvement de métal au moyen de meules, d'aléseuses ou de tours spéciaux. Compte tenu de l'écart important existant entre l'épaisseur des tubes et l'épaisseur des soudures que l'on veut obtenir, la quantité de métal enlevée lors du calibrage est le plus souvent très importante. Par conséquent, cette opération grève également, d'une manière considérable le coût total de la canalisation.

Le but de la présente invention est de remédier aux inconvénients de l'état de la technique précité, en fournissant un procédé pour calibrer les extrémités d'éléments métalliques tubulaires, qui permet de réaliser une importante économie de matière première et de main d'oeuvre.

Suivant l'invention, ce procédé est caractérisé en ce qu'on chauffe l'extrémité des éléments tubulaires et on engage à force ces extrémités sur une forme de calibrage adaptée pour réaliser sur celles-ci un évasement dont le diamètre intérieur maximal (D) est au moins égal à celui correspondant à la tolérance maximale admise en fabrication pour ces éléments tubulaires, augmentée éventuellement de la tolérance sur l'ovalisation et celle due au retrait de refroidissement et de soudage.

L'évasement pratiqué à l'extrémité des tubes permet ainsi d'égaliser les diamètres intérieurs des tubes.

En disposant les tubes ainsi évasés bout à bout, l'épaisseur de leur surface de contact est égale à l'épaisseur moyenne des tubes. De ce fait, il n'est plus nécessaire d'utiliser des tubes présentant une épaisseur supérieure à 40 % environ à l'épaisseur de la soudure exigée.

De plus, il n'est plus nécessaire d'enlever des quantités importantes de métal avant le soudage des tubes. L'économie de matière première et de main d'oeuvre ainsi réalisée est très importante.

Par ailleurs, l'évasement pratiqué aux extrémités des tubes est favorable à l'écoulement des fluides à l'intérieur de ceux-ci, étant donné que cet évasement compense largement le ·rétrécissement de la section de passage occasionné par le retrait de soudage.

D'autre part, le chauffage de l'extrémité des éléments tubulaires avant de les engager sur la forme de calibrage facilite la déformation du métal et permet d'évaser des tubes en une matière dure telle que l'acier ordinaire, en évitant toute altération des propriétés mécaniques du matériau. Ce chauffage est de préférence réalisé par induction, ce qui permet d'obtenir une montée très rapide en température, favorable au maintien des propriétés métallurgiques du matériau de ces tubes.

L'invention vise également une machine pour calibrer les extrémités d'éléments métallurgiques tubulaires destinées à être soudées bout à bout.

Cette machine est caractérisée en ce qu'elle comprend un butoir fixe pour immobiliser une forme de calibrage ou un tube et des moyens pour permettre un déplacement relatif avec application d'une force suivant l'axe du tube et de la forme de calibrage, cette dernière étant adaptée pour réaliser sur les extrémités des tubes un évasement dont le diamètre intérieur maximal est au moins égal à celui correspondant à la tolérance maximale admise en fabrication augmentée éventuellement de la tolérance sur l'ovalisation et celle due au retrait de refroidissement et de soudage et en ce qu'un organe annulaire de chauffage entoure l'extrémité de l'élément tubulaire à calibrer.

D'autres particularités et avantages de l'invention apparaîtront encore dans la description ci-après.

Aux dessins annexés, donnés à titre d'exemples non limitatifs :

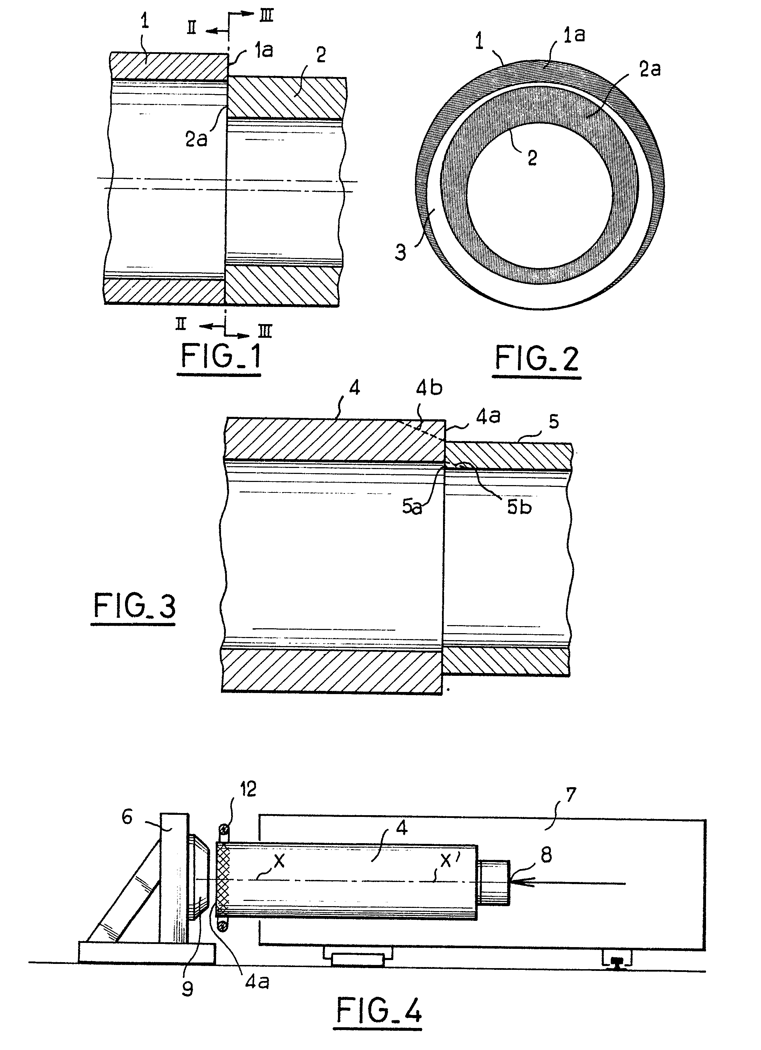

. la figure 1 est une vue en coupe longitudinale des extrémités de deux tubes disposés bout à bout et présentant des diamètres et épaisseurs variables résultant des tolérances de fabrication ;

. la figure 2 est une vue en coupe à la fois suivant les plans II-II et III-III de la figure 1 ;

. la figure 3 est une vue en coupe longitudinale des extrémités de deux tubes disposés bout à bout ;

. la figure 4 est une vue schématique en élévation, d'une machine de calibrage conforme à l'invention ;

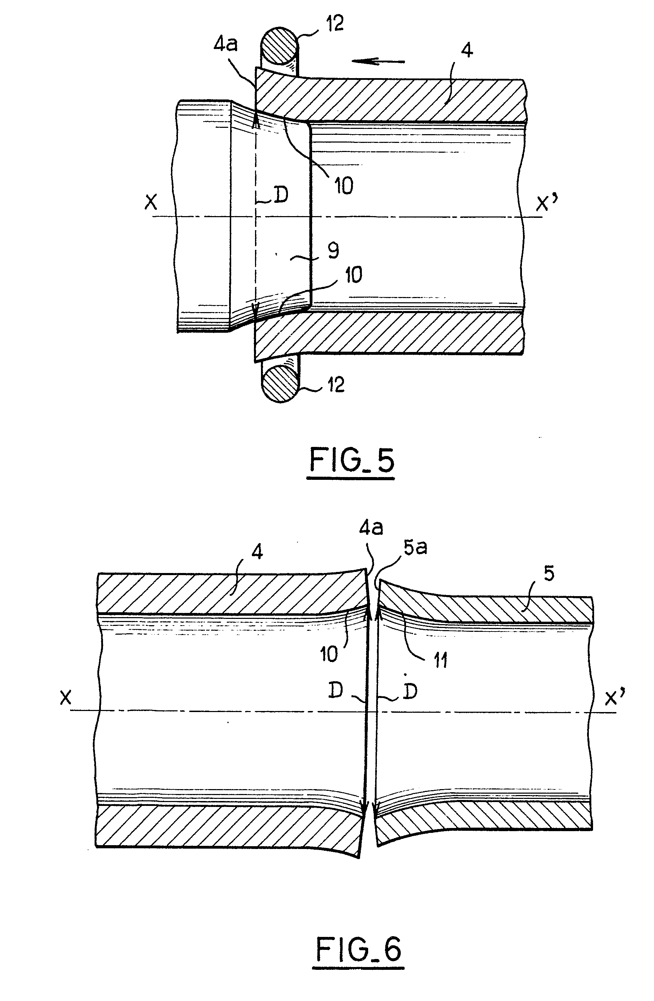

. la figure 5 est une vue en coupe longitudinale partielle et à plus grande échelle de l'extrémité d'un tube engagée sur la forme de calibrage de la machine conforme à l'invention ;

. la figure 6 est une vue en coupe longitudinale des deux tubes de la figure 3, après calibrage par évasement de leurs extrémités au moyen de la machine selon la figure 4 ;

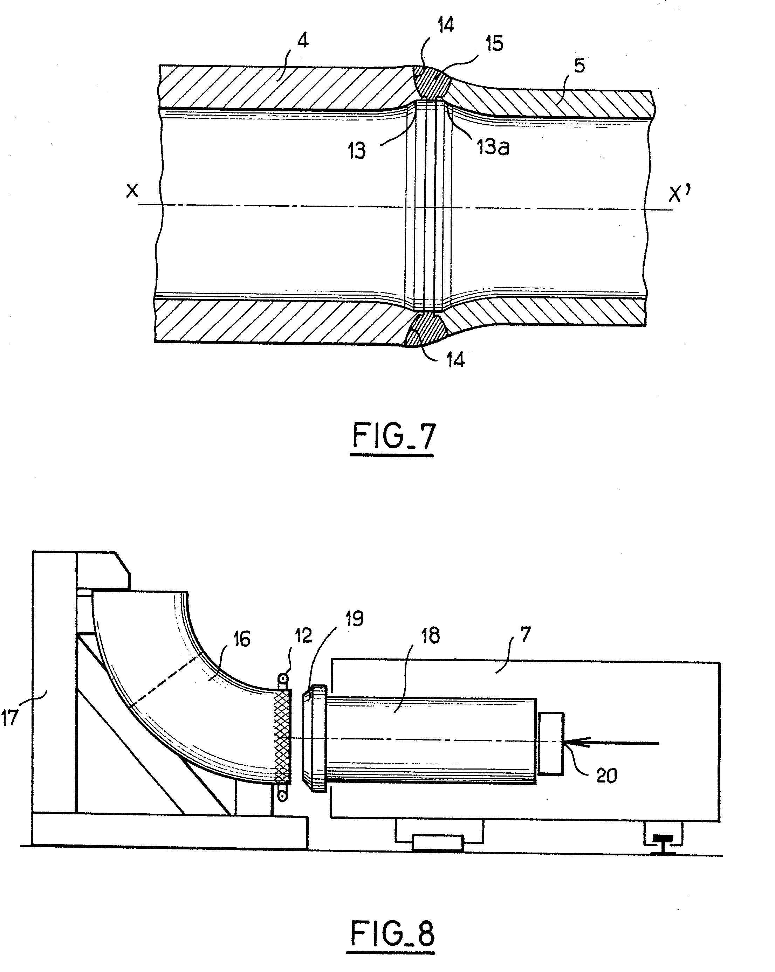

. la figure 7 est une vue en coupe longitudinale des deux tubes soudés bout à bout ;

. la figure 8 est une variante de la machine conforme à l'invention.

Sur les figures 1 et 2, on a représenté  deux tubes 1, 2 en acier provenant d'une même fabrication en série de tubes présentant un diamètre nominal donné.

Compte tenu des tolérances de fabrication il s'avère que le tube 1 présente un diamètre extérieur répondant à la tolérance maximale et une épaisseur de paroi qui correspond à la tolérance minimale. Le tube 2 au contraire, présente un diamètre extérieur répondant à la tolérance minimale et une épaisseur de paroi qui correspond à la tolérance maximale.

Entre les extrémités en contact 1a et 2a des tubes 1 et 2, il existe une surface de contact mutuel dont l'épaisseur radiale est insuffisante pour permettre un soudage répondant aux exigences de fiabilité et de sécurité requises. Dans un tel cas, la soudure ne peut être exécutée qu'après un apport de métal relativement important pour compenser le diamètre extérieur trop faible du tube 2.

De plus, la saillie interne constituée par l'extrémité 2a du tube 2 le plus étroit, constituerait un obstacle qui perturberait l'écoulement du fluide à l'intérieur des deux tubes. Par ailleurs, la réglementation relative à la géométrie des joints soudés ne permet que de très faibles désalignements. Cette saillie doit donc être enlevée par usinage.

Une autre situation est représentée sur la figure 3. Le tube 4 présente un diamètre extérieur qui correspond à la tolérance maximale et l'épaisseur de sa paroi est maximale.

Le tube 5 possède un diamètre extérieur minimal et l'épaisseur de sa paroi est également minimale. La surface de contact entre les extrémités 4a et 5a des tubes 4 et 5 peut être considérée comme suffisante pour la soudure. Toutefois, avant de procéder à cette soudure, il faudrait, conformément aux méthodes conventionnelles, enlever par usinage les zones 4b et 5b délimitées par des lignes en pointillés pour supprimer les parties en saillie à l'intérieur et à l'extérieur des extrémités 5a et 4a de ces tubes.

Selon le procédé conforme à l'invention, on évite l'élimination du métal dans des zones 6 et 7 au moyen d'une machine de calibrage telle que représentée sur les figures 4 et 8.

Dans l'exemple représenté sur la figure 4, la machine comprend un butoir fixe 6 placé en regard d'un bâti 7 portant un tube, par exemple le tube 4.

Ce tube 4 est monté sur ce bâti 7 de façon mobile, suivant son axe X-X', au moyen d'un pousseur 8 appliqué contre l'extrémité du tube opposée à son extrémité 4a adjacente au butoir 6.

Le butoir 6 porte une forme ou mandrin de calibrage 9 présentant une surface sensiblement tronconique dont l'axe est aligné avec l'axe X-X' de déplacement du tube 4.

La forme de calibrage 9 est adaptée pour réaliser sur l'extrémité 4a du tube 4 (ou sur l'extrémité 5a du tube 5), un évasement 10 ou 11 (voir figures 5 et 6). Le diamètre intérieur maximal de l'évasement 10 ou 11 réalisé dans le tube 4 ou 5 est au moins égal à celui correspondant à la tolérance maximale admise en fabrication pour les tubes 4 ou 5, augmentée s'il y a lieu de la tolérance sur l'ovalisation et le retrait.

Ainsi, quel que soit le diamètre intérieur initial et l'ovalisation dans les limites admises par les tolérances de fabrication, l'évasement réalisé sur l'extrémité des tubes 4 et 5 permet d'ajuster leur diamètre intérieur à une valeur D donnée en principe par le diamètre de la forme (voir figure 5).

Dans le cas de tubes en métaux à limite élastique élevée tels que l'acier, couramment utilisé dans les canalisations, l'extrémité des tubes est chauffée avant de l'engager sur la forme de calibrage 9 afin de rendre le métal malléable.

Dans l'exemple de la figure 4, ce chauffage est réalisé au moyen d'un inducteur 12 de forme appropriée entourant le tube 4 au voisinage de son extrémité 4a.

Dans le cas de tubes en acier couramment utilisés pour réaliser des canalisations de transport de produits gazeux ou liquides, présentant un diamètre compris entre 100 et 2 500 mm environ dont la paroi présente une épaisseur comprise entre 10 et 50 mm environ, l'extrémité des tubes est portée à une température comprise généralement entre 650 et 1050°C, avant leur engagement sur la forme de calibrage 9.

La puissance de chauffage réalisée par l'inducteur 12 est adaptée pour obtenir une vitesse de montée en température dans l'acier des tubes, suffisamment rapide pour éviter toute détérioration des caractéristiques métallurgiques de l'acier.

Après calibrage des extrémités des deux tubes 4 et 5, il n'est pas toujours nécessaire avant de procéder au soudage, de pratiquer un léger délardage 13, 13a (voir figure 7) à l'intérieur des tubes au niveau de leurs extrémités adjacentes 4a et 5a.

Ce délardage n'exige qu'un faible enlèvement de matière, étant donné que les évasements 10 et 11 permettent d'égaliser les diamètres intérieurs des tubes 4 et 5.

Après avoir effectué cette opération, les extrémités des tubes 4 et 5 sont usinées de façon à obtenir lorsque ces dernières sont mises bout à bout, un chanfrein 14 de forme appropriée qui reçoit ensuite la soudure 15.

L'épaisseur radiale minimale de cette soudure 15 est pratiquement égale à l'épaisseur correspondant à la tolérance minimale des tubes, c'est-à-dire celle du tube 5.

Etant donné que le procédé conforme à l'invention permet d'obtenir une surface de contact optimale entre les extrémités des tubes, il est possible de réaliser une soudure parfaitement sûre et fiable en partant de tubes présentant une épaisseur moyenne beaucoup plus faible (généralement $\leqslant$ 40%) que dans le cas des tubes utilisés dans le procédé conventionnel.

On réalise ainsi une importante économie de matière première.

Par ailleurs, étant donné que les surfaces internes des tubes évasés ne nécessitent aucun important enlèvement de matière , au niveau de leurs extrémités pour calibrer leur diamètre, l'invention permet de réaliser d'importantes économies en main-d'oeuvre.

D'autre part , compte tenu de la présence des évasements 10 et 11 à l'intérieur des tubes assemblés, le léger rétrécissement occasionné par le retrait de la soudure ne risque pas d'avoir une influence néfaste sur l'écoulement du fluide à l'intérieur des tubes, contrairement au cas des réalisations connues.

A titre d'exemple non limitatif , le procédé conforme à l'invention a été mis en oeuvre sur un tube en acier A 48 de diamètre égal à 762 mm et présentant une épaisseur de paroi égale à 31 mm.

L'extrémité à évaser de ce tube a été portée à une température de 950 °C.

L'évasement a été obtenu en exerçant sur le tube une poussée de 15 tonnes.

L'ovalisation du tube à son extrémité a été ramenée de 6 à 1 mm et son diamètre intérieur moyen dans la partie évasée a été augmenté de 700,5 mm à 705,5 mm.

L'opération proprement dite d'évasement a duré environ 6 mn, non comprise la durée nécessaire pour la mise en place et l'enlèvement du tube.

Le procédé conforme à l'invention peut également s'appliquer au calibrage des tubes coudés.

Dans la réalisation de la figure 8, le tube coudé 16 est maintenu par un butoir 17 en regard d'un mandrin 18 portant une forme de calibrage 19. Ce mandrin 18 est mobile vers l'extrémité du tube coudé, sous l'action d'un pousseur 20.

Comme dans la réalisation de la figure 4, l'extrémité à évaser du tube coudé 16 est entourée par un élément de chauffage par induction 12.

Bien entendu, l'invention n'est pas limitée aux exemples que l'on vient de décrire et on peut apporter à ceux-ci de nombreuses modifications, sans sortir du cadre de l'invention.

Ainsi, le procédé conforme à l'invention peut s'appliquer au calibrage d'éléments tubulaires divers tels que les embouts de vannes, les raccords en T et analogues destinés à être soudés à d'autres éléments tubulaires.

Le chauffage de l'extrémité de l'élément tubulaire à évaser peut être réalisé au moyen de brûleurs à gaz disposés radialement autour de cette extrémité.

La forme de calibrage 9 ou 19 peut elle-même être réchauffée par exemple par une résistance chauffante incorporée dans sa masse ou par circulation d'un fluide chaud.

Par ailleurs, en fin d'opération d'évasement d'un tube, la forme de calibrage 9 ou 19 peut éventuellement être refroidie par exemple, par de l'azote liquide, pour accélérer le refroidissement de la partie évasée, ou pour réaliser une trempe de cette partie si nécessaire en fonction des propriétés métallurgiques recherchées ou pour faciliter le dégagement du tube par rapport à la forme de calibrage.

D'autre part, la forme de calibrage peut, le cas échéant, comporter des moyens pour permettre son expansion à l'intérieur de l'élément tubulaire à calibrer.

En outre, la machine conforme à l'invention pourrait comporter des moyens tels qu'une butée, un contact ou un détecteur, pour limiter la course d'engagement de l'extrémité de l'élément tubulaire sur la forme de calibrage 9 ou 19.

Bien entendu, on peut réaliser sur un tube en même temps le calibrage des deux extrémités en utilisant deux formes de calibrage adaptées au diamètre du tube.

Un résultat équivalent à celui obtenu selon le procédé que l'on vient de décrire, peut être atteint en engageant à force les extrémités des éléments tubulaires dans une forme de calibrage adaptée pour réaliser sur ces extrémités un rétreint dont le diamètre intérieur minimal est au moins égal à celui correspondant à la tolérance minimale admise en fabrication, augmentée éventuellement de la tolérance sur l'ovalisation.

Un tel procédé est intéressant lorsque les tubes ou éléments tubulaires présentent un diamètre supérieur à la moyenne. Ce procédé peut être mis en oeuvre au moyen d'une machine comparable à celle décrite, en remplaçant la forme de calibrage mâle (9, 19) par une forme de calibrage femelle destinée à s'engager sur l'extrémité de l'élément tubulaire à calibrer.

0077257

## REVENDICATIONS

1. Procédé pour calibrer les extrémités d'éléments métalliques tubulaires (4, 5, 16) destinés à être soudés bout à bout, caractérisé en ce qu'on chauffe l'extrémité des éléments tubulaires (4, 16) et on engage à force ces extrémités sur une forme de calibrage (9, 19) adaptée pour réaliser sur celles-ci un évasement dont le diamètre intérieur maximal (D) est au moins égal à celui correspondant à la tolérance maximale admise en fabrication pour ces éléments tubulaires, augmentée éventuellement de la tolérance sur l'ovalisation et celle due au retrait de refroidissement et de soudage.

2. Procédé conforme à la revendication 1, appliqué au calibrage de tubes en acier de diamètre extérieur compris entre 100 et 2 500 mm environ dont la paroi présente une épaisseur comprise entre 10 et 50 mm environ, caractérisé en ce qu'on porte l'extrémité des tubes à une température suffisante pour rendre l'acier malléable.

3. Procédé conforme à la revendication 2, caractérisé en ce que la puissance du chauffage est adaptée pour obtenir une vitesse de montée en température de l'acier des tubes suffisamment rapide pour éviter toute modification des caractéristiques métallurgiques de l'acier.

4. Procédé conforme à l'une quelconque des revendications 1 à 3, caractérisé en ce que le chauffage est réalisé par induction.

5. Machine pour calibrer les extrémités d'éléments métalliques tubulaires (4, 5, 16) destinés à être soudées bout à bout, caractérisée en ce qu'elle comprend un butoir (6, 17) fixe pour immobiliser une forme de calibrage (9, 19) ou un tube (4, 16) et des moyens (8, 20) pour permettre un déplacement relatif avec application d'une force suivant l'axe du tube et de la forme de calibrage, cette dernière étant adaptée pour réaliser sur les extrémités des tubes un évasement dont le diamètre intérieur maximal (D) est au moins égal à celui correspondant à la tolérance maximale admise en fabrication pour les éléments tubulaires, augmentée éventuellement de la tolérance sur l'ovalisation et en ce qu'un organe annulaire de chauffage (12) entoure l'extrémité de l'élément tubulaire (4, 16) à calibrer.

6. Machine conforme à la revendication 5, caractérisée en ce que dans le cas d'un tube rectiligne (4), la forme de calibrage (9) est fixée contre le butoir (6) et le tube est monté sur un bâti (7) de façon mobile, suivant l'axe X-X' de la forme de calibrage (9) sous l'effet d'un pousseur (8).

7. Machine conforme à la revendication 5, caractérisée en ce que dans le cas d'un tube coudé (16), ce dernier est fixé contre le butoir (17) et la forme de calibrage (19) est montée sur un bâti (7) de façon mobile suivant l'axe de l'extrémité du tube coudé (16) sous l'effet d'un pousseur (20).

8. Machine conforme à l'une quelconque des revendications 5 à 7, caractérisée en ce qu'elle comprend des moyens pour limiter la course d'engagement de l'extrémité de l'élément tubulaire sur la forme de calibrage (9, 19).

9. Procédé pour calibrer les extrémités d'éléments métalliques tubulaires destinés à être soudés bout à bout, caractérisé en ce qu'on chauffe l'extrémité des éléments tubulaires et on engage à force ces extrémités dans une forme de calibrage adaptée pour réaliser sur celles-ci un rétreint dont le diamètre intérieur minimal est au moins égal à celui correspondant à la tolérance minimale admise en fabrication pour ces éléments tubulaires, augmentée éventuellement de la tolérance sur l'ovalisation.

FIG_1

FIG_2

FIG_3

FIG_4

FIG_5

FIG_6

FIG_7

FIG_8

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X,Y | --- <br> DE-A-2 508 966 (DEUTSCHE BABCOCK) <br> *Page 5* | 1,9 | B 23 K 33/00 <br> F 16 L 13/02 |
| X,Y | --- <br> DE-C-1 238 748 (DEUTSCHE EDELSTAHL) . <br> *Colonne 4; revendication* | 1,9 | |
| Y | --- <br> DE-C- 878 034 (RHEINISCHE RÖHRENWERKE) <br> *Page 2, lignes 6-19* | 3-9 | |
| Y | --- <br> US-A-3 920 174 (U.S. PIPE AND FOUNDRY) <br> *Colonne 6, lignes 37-60* | 2 | |
| A | --- <br> FR-A- 867 880 (AVRIL) | | **DOMAINES TECHNIQUES RECHERCHES (Int. Cl. 3)** |
| A | --- <br> CH-A- 164 922 (SULZER) | 1 | B 23 K <br> F 16 L |
| | ----- | | |

Le présent rapport de recherche a été établi pour toutes les revendications

| Lieu de la recherche <br> LA HAYE | Date d'achèvement de la recherche <br> 30-11-1982 | Examinateur <br> HOORNAERT W. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82